# EUROPEAN PATENT SPECIFICATION

(11) **EP 0 448 728 B1**
(45) Date of publication and mention of the grant of the patent: **27.07.1994**
(21) Application number: 90915196.1
(22) Date of filing: 18.10.1990
(51) Int. Cl.: F01N 7/08

(54) **EXHAUST APPARATUS IN SADDLE TYPE VEHICLE**
ABGASANLAGE FÜR ZWEIRAD-KRAFTFAHRZEUG
DISPOSITIF D'ECHAPPEMENT POUR VEHICULES DU TYPE A SELLE

(30) Priority: 18.10.1989 JP 270780/89; 24.07.1990 JP 78427/90 U
(43) Date of publication of application: 02.10.1991
(73) Proprietor: HONDA GIKEN KOGYO KABUSHIKI KAISHA, Minato-ku Tokyo (JP)
(72) Inventor: AMINO, Hideo, Fujimi-shi, Saitama-ken 354 (JP); MIURA, Tamotsu, Yokohama-shi, Kanagawa 221 (JP); HORIIKE, Satoru, Tokyo 177 (JP); SHIBATA, Kazumi, Fujimi-shi, Saitama-ken 354 (JP)
(74) Representative: Fincke, Karl Theodor, Dipl.-Phys. Dr.
(86) International application number: JP9001339
(87) International publication number: WO9105944

(56) References cited:
- DE-A- 3 601 273
- JP-B- 6 113 085
- JP-U- 5 985 317
- JP-U- 6 236 973
- US-A- 4 633 965

## Description

### Field of Industrial Application:

The present invention relates to exhaust apparatuses for straddle seat type vehicles such as two- or three-wheeled motorized vehicles in which an internal combustion engine is provided at the center of a chassis having front and rear wheels and which is provided with an exhaust pipe which is connected to the internal combustion engine and a muffler which is connected to the exhaust pipe; in which apparatus a rear cowl is provided at the rear of the seat and the muffler is provided within the rear cowl, and the exhaust pipe which is connected to the muffler passes through a position below the seat and is connected to the internal combustion engine.

### Background Art:

In US-PS 4,633,965 an exhaust apparatus for straddle seat type vehicles has been disclosed in which an internal combustion engine is provided at the center of a chassis having front and rear wheels and which is provided with an exhaust pipe which is connected to the internal combustion engine and a muffler which is connected to the exhaust pipe; in which apparatus a rear cowl is provided at the rear of the seat and the muffler is provided within the rear cowl, and the exhaust pipe which is connected to the muffler passes through a position below the seat and is connected to the internal combustion engine.

In this exhaust apparatus the muffler has a smaller width than the seat.

As disclosed in Japanese Patent Application Second Publication No. Hei 1-44553, Japanese Patent Application Second Publication No. Hei 1-34198 and Japanese Patent Application First Publication No. Sho 64-12986, exhaust structures exist for straddle seat type vehicles in which an internal combustion engine is provided in a generally central part of the longitudinal direction of the chassis an exhaust pipe which is connected to this internal combustion engine is guided in the downward and rearward direction of the chassis, and moreover, this exhaust pipe is connected to a muffler which is provided at the rear side of the chassis.

In accordance with this structure, the muffler is provided at the rear side of the chassis, so that the muffler is exposed to the exterior and it is a simple matter to bring the muffler into contact with the air which flows by at the time of the operation of the vehicle, so that efficient cooling of the muffler, which tends to become heated during operation of the vehicle, can be conducted.

However, in the conventional technology described above, because the muffler is provided at the side of the chassis, the increase in capacity of the muffler itself is limited as a result of the limitation in the width of the chassis. Furthermore, since a sufficient gap must be maintained between the rider and the muffler, difficulties arise, such as the restriction of the freedom in the layout of the muffler and the exhaust pipe which is connected thereto. Accordingly, countermeasures have been conventionally sought to overcome these difficulties, and the present invention solves the problems that have been mentioned above.

### Disclosure of the Invention:

According to the present invention, an exhaust apparatus on a straddle seat type vehicle is proposed in which an internal combustion engine is provided at the center of a chassis having front and rear wheels, comprising exhaust pipe means which is connected to the internal combustion engine and to muffler means, and a rear cowl at the rear of the seat enclosing the muffler means.

This apparatus is characterized in that the muffler means have a greater width than the seat, that the rear cowl has parts extending to the left and to the right and having air guiding holes formed in front surfaces thereof, that an air exhaust hole is formed in a rear surface of the rear cowl, and that a passage for cooling the muffler means connects the air guiding holes and the air exhaust hole.

According to the invention the capacity of the muffler means and the amount of ventilation within the rear cowl are increased.

If an exhaust collector chamber is provided between the internal combustion engine and the rear wheel it is possible to bend the exhaust pipe which is provided beneath the seat and connected to this exhaust collector chamber.

If the exhaust pipe which is positioned below the seat is given a flat shape so as to increase its width in lateral direction of the chassis, it is possible to prevent the interference of the rear wheel and the exhaust pipe.

If the rear wheel is supported freely swingable in an up and down direction of the chassis on a cantilevered swing arm and the exhaust pipe is provided in a bent manner from a position beneath the seat to the forward part of the rear wheel, it is possible to remove the rear wheel from the side and thus operations such as maintenance and the like are facilitated.

### Brief Description of the Drawings

The appended drawings show a preferred embodiment of the present invention.

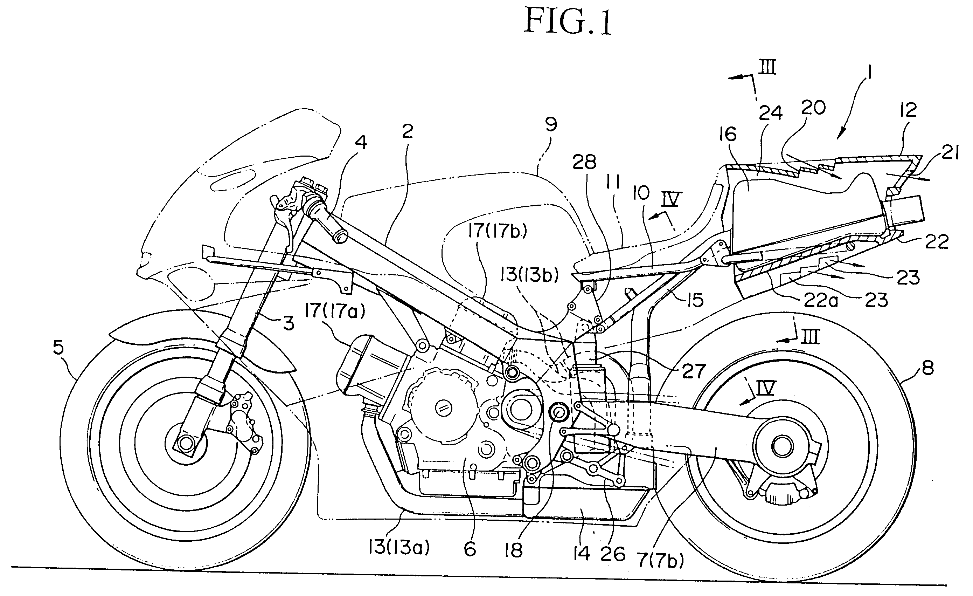

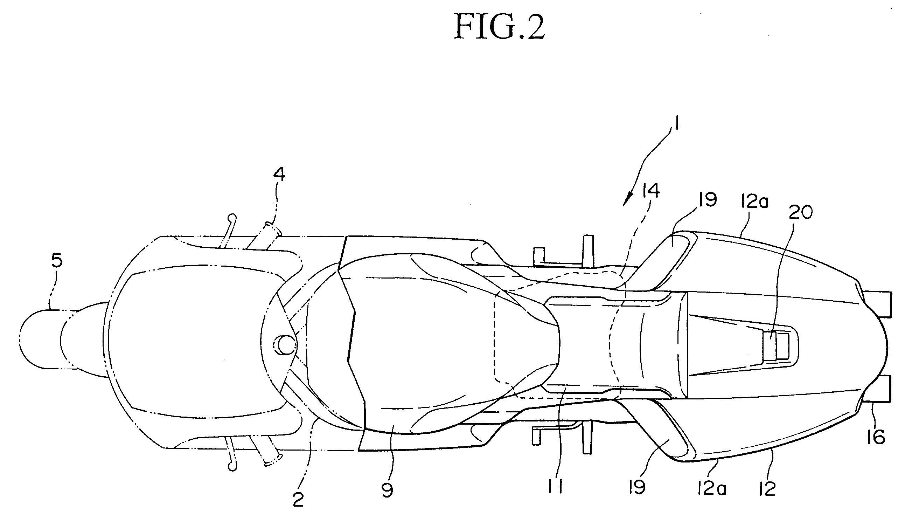

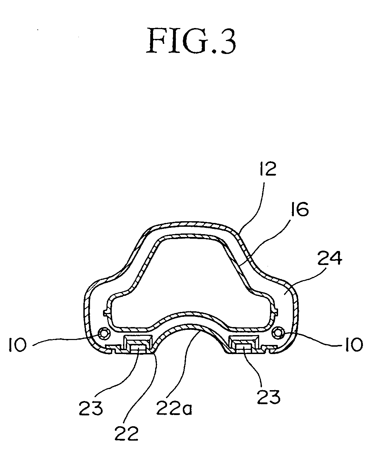

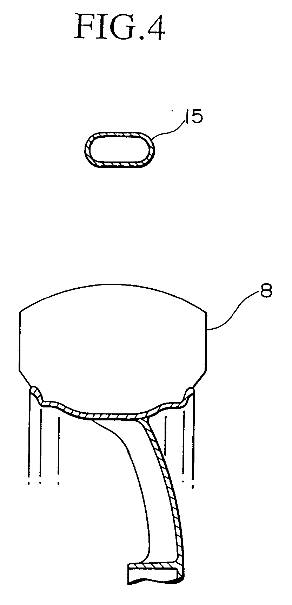

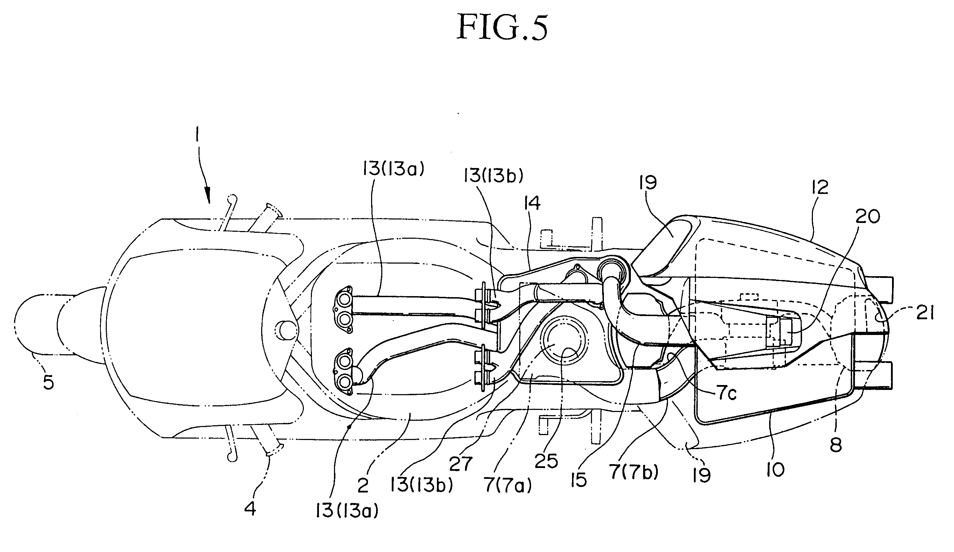

Figures 1∼5 show a first embodiment of the invention; Figure 1 is a side view showing a two-wheeled motor vehicle, Figure 2 is a top view of the same vehicle, Figure 3 is a cut-away cross sectional view along the line III-III in Figure 1, Figure 4 is a cut-away cross sectional view along the line IV-IV in Figure 1, and Figure 5 is a top view of the main components.

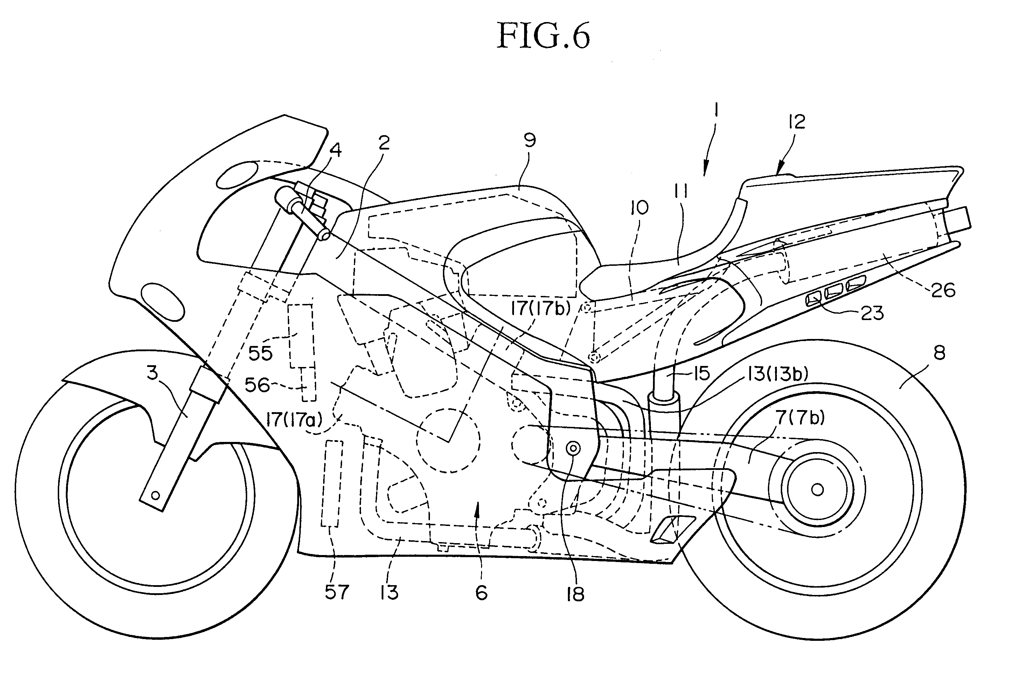

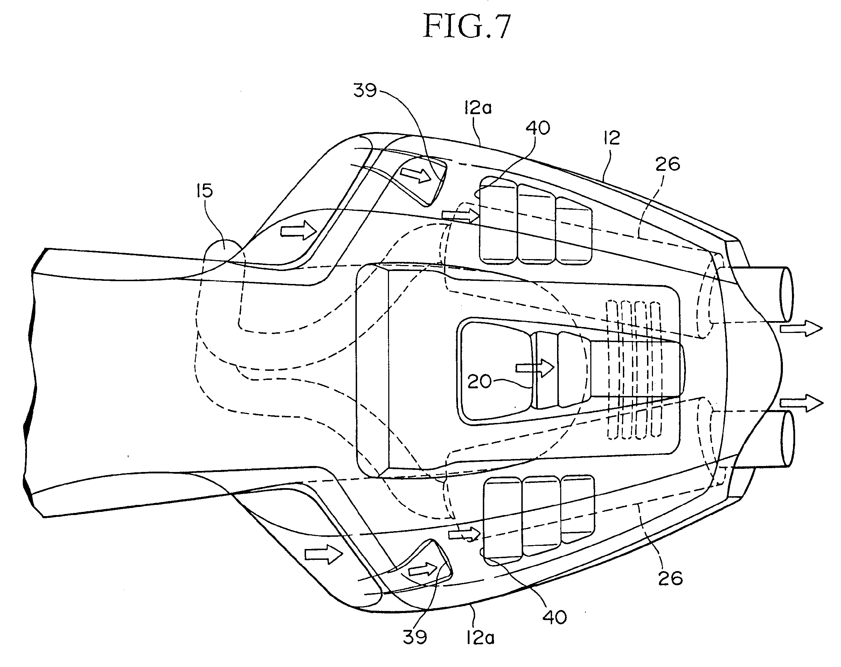

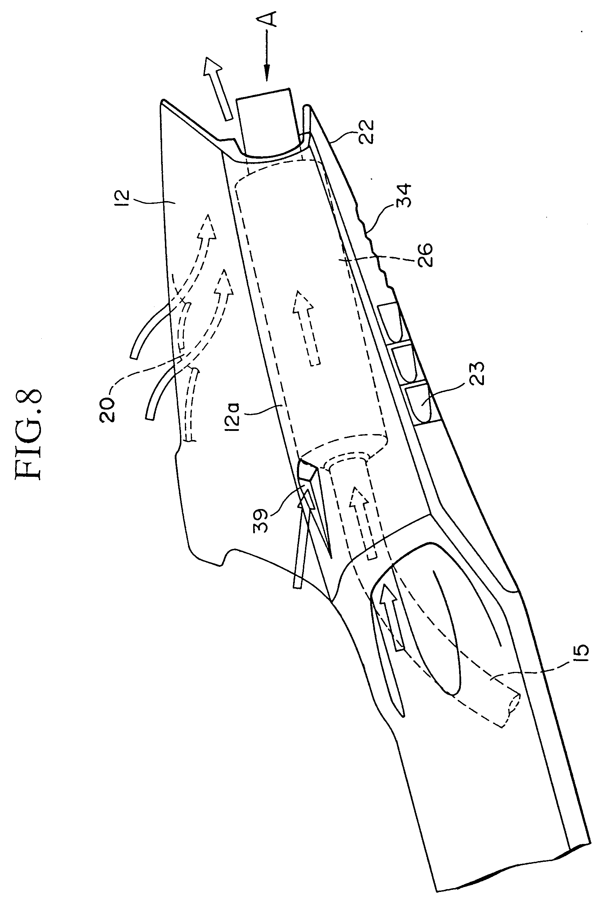

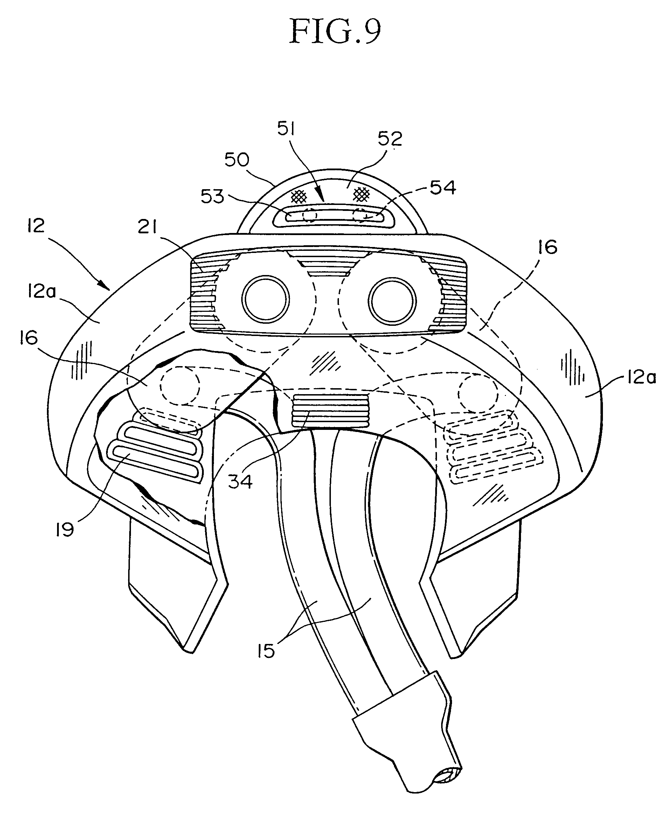

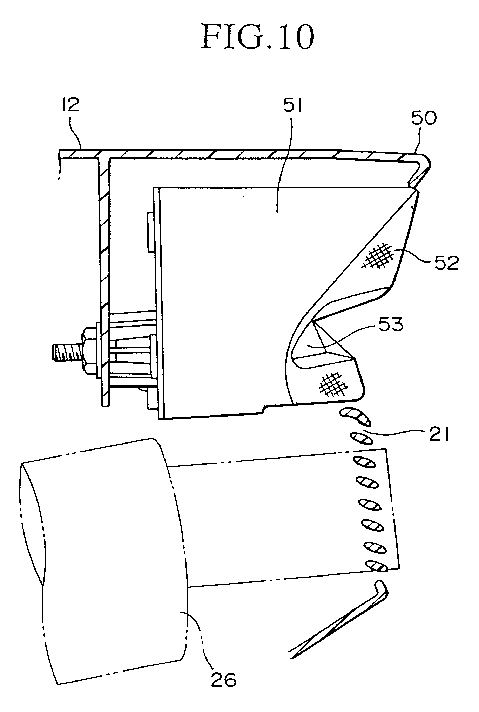

Figures 6∼10 show a second embodiment of the invention; Figure 6 is a side view of a two-wheeled motor vehicle, Figure 7 is a top view of the main components, Figure 8 is a side view of the main components, Figure 9 is a view in the direction of the arrow A in Figure 8, and Figure 10 is a vertical cross sectional view of the rear part of the rear cowl.

### Most Preferred Form for the Embodiment of the Invention

The first embodiment of this invention will be explained based on Figures 1∼5.

Reference numeral 1 indicates a two-wheeled motor vehicle which is a straddle seat type vehicle to which the present invention is applied. This two-wheeled motor vehicle 1 is provided with chassis frame 2, front fork 3 which is inserted freely rotatably in the forward direction of this chassis frame 2, steering handle 4 which is inserted in the upper end part of the front fork 3, front wheel 5 which is inserted freely rotatably at the lower end part of the front fork 3, internal combustion engine 6 which is provided in a suspended manner at the lower part of the chassis frame 2, cantilevered swing arm 7 which is inserted freely swingably in the rearward direction of the lower part of chassis frame 2, rear wheel 8 which is inserted freely rotatably at the swinging end part of this swing arm 7, fuel tank 9 which is inserted in a position which is in an upward direction from the chassis frame 2 and the internal combustion engine 6, seat rail 10 which is provided in an extending manner from the upper part of the rear of chassis frame 2 in the direction of the upper part of rear wheel 8, seat 11 which is inserted above seat rail 10 and to the rear of fuel tank 9, rear cowl 12 which is affixed to seat rail 10 at the rear of seat 11, exhaust pipe 13 which is connected to internal combustion engine 6, collector chamber 14 which is connected to the downstream side of exhaust pipe 13, rearward exhaust pipe 15 which is provided extending from this collector chamber 14, and muffler 16 which is connected to the downstream side of this rearward exhaust pipe 15.

In greater detail, the internal combustion engine 6 is a V-type, 4-cylinder engine which has cylinders 17 (17a, 17b) which are distributed to the front and rear. The exhaust pipe 13 is provided with a pair of exhaust pipes 13a for use with the front cylinders 17a and a pair of exhaust pipes 13b for use with the rear cylinders 17b.

Furthermore, the collector chamber 14 is provided to the rear of the internal combustion engine 6 and beneath the pivot part 18 of the swing arm 7 and has a flat shape with a large width in the lateral direction of the chassis. The pair of exhaust pipes 13a for use with the front chambers 17a are connected to the front surface of the collector chamber 14 after passing beneath the internal combustion engine 6.

On the other hand, the rear cowl 12 is formed with a greater width than seat 11, as shown in Figure 2, and air guidance holes 19 and 20 which communicate the inside and outside of rear cowl 12 are formed in the front end surfaces of both sides of rear cowl 12 and roughly in the lateral center of the upper surface, and furthermore, a louver-shaped air exhaust hole 21 is formed in the rear surface thereof. As shown in Figure 3, holes are formed in the bottom part of rear cowl 12, and these are closed by means of the insertion of the rear fender 22 which is provided above rear wheel 8 and accordingly, this rear cowl 12 has the shape of a case which surrounds the muffler 16. Furthermore, a concavity 22a is formed running in the lengthwise direction of rear fender 22 in a position which corresponds to the rear wheel 8, and on both sides of this concavity 22a, air holes 23 which communicate the inside and outside rear cowl 12 are formed.

In addition, as shown in Figures 1∼3, the external shape of the muffler 16 conforms almost entirely to the inner surface shape of the cavity which is formed by rear cowl 12 and rear fender 22 and an air guiding passage 24 which has an almost entirely fixed distance from the inner surface of the cavity over the entire length thereof.

Furthermore, the rearward exhaust pipe 15 which connects the muffler 16 and the collector chamber 14 is provided between the approximately central portion of the front surface of muffler 16 and the part of the collector chamber 14 at which the exhaust pipes 13b which are used for the rear cylinder 17b are connected; this pipe begins in a nearly vertical manner from collector chamber 14 and is then bent along seat rail 10 and is connected to muffler 16.

Furthermore, the part of the rearward exhaust pipe 15 which is placed along seat rail 10 has a flat shape which has a large width in the lateral direction of the chassis, as shown in Figure 4. As shown in Figure 5, the swing arm 7 comprises, in the present example, a base part 7a which covers the collector chamber 14 and a support part 7b which extends from this base part 7a to the left side of the rear wheel 8.

In base part 7a, notches 7c are formed for the purpose of avoiding the mutual obstruction of the pair of exhaust pipes 13b which are connected to the collector chamber 14 and the rearward exhaust pipe 15, and in addition, a passage hole 25 is formed in a vertical direction in approximately the central part of the base plate 7a. A ring mechanism 26 is positioned in the bottom surface of the base part 7a so as to be positioned below the passage hole 25. The lower end part of a rear cushion unit 27 which is inserted into the passage hole 25 is connected to this ring mechanism 26.

As shown in Figure 1, the upper end part of this rear cushion unit 27 is supported by means of a bracket 28 which is connected to the rear end upper part of the chassis frame 2.

Next, the operation of the exhaust apparatus of the first example will be explained.

In the exhaust apparatus of the present example, rear cowl 12 is provided to the rear of seat 11, muffler 16 is provided within rear cowl 12, and the exhaust pipe 15 which is connected to muffler 16 is bent downwards at a position below seat 11 and is connected to internal combustion engine 6. Due to this, even in the case in which the capacity of the muffler 16 is enlarged, there is no extension of muffler 16 to the right and left at the position of seat 11, so that it is possible to increase the degree of freedom of the riding position of the operator.

Furthermore, the muffler 16 is provided in the rear cowl 12 and it has a larger width than seat 11 so that it is possible to increase the width dimension of muffler 16 while controlling the increase in the lateral extension of the chassis and as a result, it is possible to enlarge the capacity of muffler 16.

Furthermore, parts 12a which extend to the right and left are provided on rear cowl 12 and air guidance holes 19 are formed in the front surfaces of these extended parts 12a, and an air exhaust hole 21 is formed in the rear surface of the rear cowl, and muffler 16, which is provided to the rear of rearward exhaust pipe 15, is provided along the cooling passage which connects air guidance holes 19 and air exhaust hole 21 so that it is possible to directly cause cooling air to flow from the front to the rear within rear cowl 12, and thus the air flow characteristics are good, so that the muffler 16 does not tend to become surrounded by hot air, and it is possible to concentrate a large amount of cooling air, and thus, it is possible to increase the cooling ability of muffler 16.

Furthermore, the cross sectional shape of rear cowl 12 is such that it encloses muffler 16, and air guidance holes 20 are formed in the upper part of rear cowl 12, and holes 23 are formed in the rear fender 22 which is inserted at the lower part of rear cowl 12 so that it is possible to increase the amount of air which passes through rear cowl 12 and to further increase the cooling ability of the muffler.

In addition, the collector chamber 14 is provided between the internal combustion engine 6 and the rear wheel 8, and the rearward exhaust pipe 15 which is provided below seat 11 is connected to this collector chamber 14, so that the mutual interference of the rearward exhaust pipe 15 and the rear wheel 8 can be prevented, and it is possible to increase the spatial efficiency.

Furthermore, the rearward exhaust pipe 15 which is positioned beneath the seat 11 has a flat shape such that the width thereof is large in the lateral direction of the chassis, so that as a result of this, it is possible to prevent the mutual interference of the rearward exhaust pipe 15 and the rear wheel 8. By means of this, it becomes possible to dispose the rearward exhaust pipe 15 which is connected to the muffler 16 in a roughly central part of the chassis, and the disposal thereof at a position at which a sheltering part exists between it and the rider becomes possible, and thus the countermeasures for the heat from the exhaust system becomes simple.

Furthermore, the rear wheel 8 is pivotally supported on cantilever swing arm 7 so as to be freely swingable in an up and down direction of the chassis, and the rearward exhaust pipe 15 is extended in an up and down direction in front of the rear wheel 8, so that it is possible to remove the rear wheel 8 from the side thereof and thus maintenance is facilitated.

Furthermore, the rear cowl 12 is formed with a greater width than seat 11, the muffler 16 is provided within this rear cowl 12 and the muffler 16 has a shape which conforms to the inner surface of rear cowl 12, so that the width dimension of the muffler 16 can be expanded while controlling the amount of the lateral extension of the chassis, and as a result, an increase in capacity of the muffler 16 becomes possible.

Furthermore, the space between the muffler 16 and a rider seated on seat 11 is sheltered by means of rear cowl 12, and thus the transmission of heat to the seat 11 can be greatly controlled.

Accordingly, the degree of freedom in the establishment of the spacing between seat 11 and muffler 16 becomes large and the degree of freedom in the design is increased, and by means of placing the muffler 16 within the rear cowl 12, an increase in appearance can be achieved.

In addition, the lower part of rear cowl 12 is closed up by means of rear fender 22, so that the sheltering of the muffler 16 from the outside is reliably conducted, and by means of the formation of an air passage 24 having a case-shape around muffler 16, and by means of the guidance of the air flow which is guided into rear cowl 12 when the vehicle is in operation and passes the outer surface of the muffler 16, it is possible to increase the ability to cool muffler 16.

In this case, a muffler 16 with a great width is not necessary; the effects of the invention would be unaffected if a normal cylindrical muffler were used.

Furthermore, since a rear cowl 12 is used and a rear fender 22 is attached thereto, no special materials are necessary at the time of the attachment of rear fender 22, so that the structure can be simplified.

In the example, the indicated shapes and dimensions of the parts of the structure shown are all examples; it is possible to alter them in various ways based on the demands of the design or the structure of the particular vehicles.

Next, the second example of the present invention will be explained based on Figures 6∼10.

In the explanation of the second example, those structures which are common to the above-described first example are identically numbered and an explanation of such structures is omitted, so that only those structures which differ will be explained here.

In this second example, in addition to the air guidance holes 19 and 20, two of each of the air guidance holes 39 and 40 are formed in the upper surface of rear cowl 12 (Figure 7) . Furthermore, in the lower part of rear cowl 12, in addition to air exhaust hole 21, an air exhaust hole 34 is formed (Figures 8 and 9).

In addition, in the above example, one muffler 16 was provided; however, in this example, two mufflers 36 are disposed in the rear cowl 12, as shown in Figure 7.

Furthermore, in Figure 10, reference numeral 50 indicates a tail lamp housing in which a tail lamp unit is disposed and a lens surface 52, which is exposed in a rearward direction. In the central part of the lens surface 52, a concavity 53 having a straight line form in a left and right direction is formed. This concavity 53 is in a position which overlies the bulb 54 (Figure 9) when viewed from the rear. In this way, in comparison with a uniform lens surface 52, the interior of concavity 53 does not become soiled during operation in rainy weather, and the visibility of the tail lamp is increased.

In Figure 6, reference numeral 55 indicates an upper water radiator, reference numeral 56 indicates an oil cooler, and reference numeral 57 indicates a lower water radiator.

The remaining structure and operational effects of the second example explained above are identical to those of the first example, so that an explanation thereof is omitted.

### Possibilities of Use in Industry

As explained above, the exhaust apparatus for straddle seat type vehicles according to the present invention can be used as an exhaust apparatus for two-wheeled motor vehicles and is especially applicable in cases in which an increase in capacity of the muffler and an improvement in cooling efficiency is desired.

## Claims

1. An exhaust apparatus on a straddle seat type vehicle (1) in which an internal combustion engine (6) is provided at the center of a chassis (2) having front wheels (5) and rear wheels (8), comprising exhaust pipe means (13, 14, 15; 13, 15) extending through a position below a seat (11) and being connected to the internal combustion engine (6) and to muffler means (16; 26), a rear cowl (12) at the rear of the seat (11) enclosing the muffler means (16; 26),
**characterized in**
that the muffler means (16; 26) have a greater width than the seat (11), that the rear cowl (12) has air inlet holes (19; 39) in front surfaces thereof extending to the left and to the right beyond the width of the seat (11), that an air exhaust hole (21) is formed in a rear surface of the rear cowl (12), and that a passage (24) for cooling the muffler means (16; 26) connects the air inlet holes (19; 39) and the air exhaust hole (21).

2. An exhaust apparatus on a straddle seat type vehicle (1) in accordance with claim 1, characterized in that in upper and lower surfaces of the rear cowl (12), holes (20, 23, 34, 39, 40) are formed which communicate with the interior and exterior of the rear cowl (12).

3. An exhaust apparatus on a straddle seat type vehicle (1) in accordance with claim 1 or claim 2, characterized in that an exhaust collector chamber (14) is provided in the exhaust pipe means (13, 14, 15; 13, 15), and that a part (15) of the exhaust pipe means (13, 14, 15; 13, 15) connected to the exhaust collector chamber (14) is bent to extend below the seat (11) .

4. An exhaust apparatus on a straddle seat type vehicle (1) in accordance with any of claims 1 to 3 characterized in that a part of the exhaust pipe means (13, 14, 15; 13, 15) extending below the seat (11) has a flat shape so that the width thereof in the lateral direction of the chassis (2) is large.

5. An exhaust apparatus on a straddle seat type vehicle (1) in accordance with any of claims 1 to 4 characterized in that the rear wheel (8) is pivotally supported on a cantilevered swing arm (7) so as to be freely swingable in an up and down direction, and the exhaust pipe means (13, 14, 15; 13, 15) are provided in a bent manner from a position in which they extend below the seat (11) to a position in front of the rear wheel (8) .

## Patentansprüche

1. Auspuffvorrichtung an einem Fahrzeug (1) mit einem Sattel zum Aufsitzen, in welchem Fahrzeug an der Mitte eines Rahmens (2) mit Vorderrädern (5) und Hinterrädern (8) eine Brennkraftmaschine (6) vorgesehen ist, welche Auspuffrohrmittel (13, 14, 15; 13, 15) aufweist, die durch eine Stelle unterhalb eines Sitzes (11) verlaufen und an die Brennkraftmaschine (6) und an Schalldämpfermittel (16; 26) angeschlossen sind, wobei eine hintere Abdeckung (12) an der Hinterseite des Sitzes (11) die Schalldämpfermittel (16; 26) einschließt,
**dadurch gekennzeichnet,**
daß die Schalldämpfermittel (16; 26) eine größere Breite als der Sitz (11) haben, daß die hintere Abdeckung (12) in ihren vorderen Flächen Lufteinlaßlöcher (19; 39) aufweist, die über die Breite des Sitzes (11) hinaus nach links und nach rechts vorstehen, daß ein Luftauslaßloch (21) in einer hinteren Fläche der hinteren Abdeckung (12) gebildet ist und daß eine Passage (24) zum Kühlen der Schalldämpfermittel (16; 26) die Lufteinlaßlöcher (19; 39) mit dem Luftauslaßloch (21) verbindet.

2. Auspuffvorrichtung an einem Fahrzeug (1) mit Sattel zum Aufsitzen nach Anspruch 1, **dadurch gekennzeichnet**, daß in oberen und unteren Flächen der hinteren Abdeckung (12) Löcher (20, 23, 34, 39, 40) gebildet sind, die mit der Innenseite und der Außenseite der hinteren Abdeckung (12) kommunizieren.

3. Auspuffvorrichtung an einem Fahrzeug (1) mit Sattel zum Aufsitzen nach Anspruch 1 oder Anspruch 2, **dadurch gekennzeichnet**, daß in den Auspuffrohrmitteln (13, 14, 15; 13, 15) eine Auspuffsammelkammer (14) vorgesehen ist und daß ein an die Auspuffsammelkammer (14) angeschlossenes Teil (15) der Auspuffrohrmittel (13, 14, 15; 13, 15) so gebogen ist, daß es unter dem Sitz (11) verläuft.

4. Auspuffvorrichtung an einem Fahrzeug (1) mit Sattel zum Aufsitzen nach einem der Ansprüche 1 bis 3, **dadurch gekennzeichnet**, daß ein unter dem Sitz (11) verlaufendes Teil der Auspuffrohrmittel (13, 14, 15; 13, 15) eine flache Form hat, so daß seine Breite in Querrichtung des Rahmens (2) groß ist.

5. Auspuffvorrichtung an einem Fahrzeug (1) mit Sattel zum Aufsitzen nach einem der Ansprüche 1 bis 4, **dadurch gekennzeichnet**, daß das Hinterrad (8) an einem Auslegerschwenkarm (7) schwenkbar gehaltert ist, so daß es in Richtung nach oben und nach unten frei schwenkbar ist, und daß die Auspuffrohrmittel (13, 14, 15; 13, 15) von einer Stelle, an der sie unter dem Sitz (11) verlaufen, zu einer Stelle vor dem Hinterrad (8) gebogen sind.

## Revendications

1. Dispositif d'échappement équipant un véhicule (1) à siège du type selle, dans lequel un moteur (6) à combustion interne est prévu au centre d'un chassis (2) présentant des roues avant (5) et des roues arrière (8), comprenant des moyens formant tubulures d'échappement (13, 14, 15 ; 13, 15) transitant par un emplacement sous-jacent à un siège (11), et reliés au moteur (6) à combustion interne et à des moyens formant silencieux (16 ; 26), un carénage postérieur (12), placé à l'arrière du siège (11), emprisonnant les moyens formant silencieux (16 ; 26),
caractérisé par le fait
que les moyens formant silencieux (16 ; 26) présentent une plus grande largeur que le siège (11) ; que le carénage postérieur (12) est percé d'orifices (19 ; 39) d'admission d'air dans des surfaces frontales s'étendant vers la gauche et vers la droite au-delà de la largeur du siège (11) ; qu'un orifice (21) de sortie d'air est pratiqué dans une surface postérieure du carénage postérieur (12) ; et qu'un canal (24), destiné au refroidissement des moyens formant silencieux (16 ; 26), relie les orifices (19 ; 39) d'admission d'air et l'orifice (21) de sortie d'air.

2. Dispositif d'échappement équipant un véhicule (1) à siège du type selle, selon la revendication 1, caractérisé par le fait que des orifices (20, 23, 34, 39, 40), pratiqués dans des surfaces supérieure et inférieure du carénage postérieur (12), communiquent avec l'intérieur et avec l'extérieur du carénage postérieur (12).

3. Dispositif d'échappement équipant un véhicule (1) à siège du type selle, selon la revendication 1 ou la revendication 2, caractérisé par le fait qu'un compartiment (14) collecteur d'échappement est prévu dans les moyens formant tubulures d'échappement (13, 14, 15 ; 13, 15) ; et qu'une partie (15) des moyens formant tubulures d'échappement (13, 14, 15 ; 13, 15), reliée au compartiment (14) collecteur d'échappement, est coudée de manière à s'étendre au-dessous du siège (11).

4. Dispositif d'échappement équipant un véhicule (1) à siège du type selle, selon l'une quelconque des revendications 1 à 3, caractérisé par le fait qu'une partie des moyens formant tubulures d'échappement (13, 14, 15 ; 13, 15), s'étendant au-dessous du siège (11), présente une configuration aplatie de telle sorte que sa largeur soit grande dans la direction latérale du châssis (2).

5. Dispositif d'échappement équipant un véhicule (1) à siège du type selle, selon l'une quelconque des revendications 1 à 4, caractérisé par le fait que la roue arrière (8) est en appui pivotant sur un bras oscillant (7) en porte-à-faux, de manière à pouvoir osciller librement vers le haut et vers le bas ; et les moyens formant tubulures d'échappement (13, 14, 15 ; 13, 15) sont prévus en un agencement coudé à partir d'un emplacement auquel ils s'étendent au-dessous du siège (11), jusqu'à un emplacement situé devant la roue arrière (8).
